# EUROPÄISCHE PATENTANMELDUNG

(11) **EP 1 519 205 A2**
(43) Veröffentlichungstag der Anmeldung: **30.03.2005**
(21) Anmeldenummer: 04022864.5
(22) Anmeldetag: 24.09.2004
(51) Int. Cl.: G01V 1/18

(54) **Verfahren und Vorrichtung zur Erfassung von seismisch bedingten Bewegungen**

(30) Priorität: 25.09.2003 DE 10344558
(71) Anmelder: SEND Signal Elektronik GmbH, 20099 Hamburg (DE)
(72) Erfinder: Schleisiek, Klaus, 22767 Hamburg (DE); Bolduan, Mark, 20259 Hamburg (DE)
(74) Vertreter: Klickow, Hans Henning,Dr.-Ing.

(57) **Zusammenfassung**

Das Verfahren und die Vorrichtung dienen zur Erfassung einer seismisch bedingten Bewegung. Innerhalb eines Gehäuses (7) eines Geophons (1) wird in Folge der seismisch bedingten Bewegungen eine Relativbewegung zwischen einer Spule (2) und einem Permanentmagneten (8) erzeugt. Ein durch die Spule fließender Strom wird als elektrische Meßgröße ausgewertet, die von der Intensität der seismischen Bewegung abhängig ist. Die Positionierung der Spule relativ zum Permanentmagneten wird von einem Lagesensor erfaßt. Von einer Regelung wird ein Strom durch die Spule hindurch derart generiert, daß die Spule eine vorgegebene Grundpositionierung relativ zum Permanentmagneten einnimmt.

## Beschreibung

Die Erfindung betrifft prinzipiell das Gebiet der seismischen Exploration sowie der Seismologie und speziell seismische Sensoren wie z.B. Geophonanordnungen. Sie umfaßt Verfahren und Anordnungen, die den Einfluß der Schwerkraft auf seismische Sensoren kompensieren, und die den gegen tiefe Frequenzen beschränkten Frequenzbereich von Geophonen überwinden.

Die Erfindung betrifft ein Verfahren zur Erfassung mindestens einer seismisch bedingten Bewegung, bei dem innerhalb eines Gehäuses eine Relativbewegung zwischen einer Spule und einem Permanentmagneten erzeugt wird und bei dem ein durch die Spule fließender Strom als elektrische Meßgröße ausgewertet wird, die von der Intensität der seismischen Bewegung abhängig ist.

Die Erfindung betrifft darüber hinaus eine Vorrichtung zur Erfassung einer seismisch bedingten Bewegung, die mindestens eine in einem Gehäuse angeordnete Spule und mindestens einen Permanentmagneten aufweist und bei der die Spule und der Permanentmagnet in Richtung einer Spulenlängsachse relativ zueinander beweglich geführt sind sowie einer Meßeinrichtung zur Bestimmung der relativen Lage der Spule und des Permanentmagneten zueinander.

In der Geophysik werden 3-Komponenten-Seismometer genutzt, um Strukturen im Erduntergrund zu erforschen. Während die vertikale Ausrichtung eines Seismometers an Land zumeist problemlos möglich ist, werden dafür auf dem Meeresgrund bisher aufwendige mechanische Vorrichtungen eingesetzt.

Als Meßeinrichtung enthält ein Seismometer ein Geophon. Ein elektrodynamisches Geophon besteht im Prinzip aus einer Spule, einem Magneten und einer federnden Aufhängung, die so angeordnet sind, daß die Spule relativ zum Magneten in nur einer Richtung beweglich ist und bei einer Bewegung einen Strom in der Spule induziert. Je nach Ausführung ist entweder der Magnet oder die Spule fest mit einem Gehäuse verbunden, das mit dem Boden des Untersuchungsgebietes gekoppelt wird. Auf Grund der Masseträgheit des federnd aufgehängten Teils wird ein Strom induziert, der der Bodenbewegung proportional ist. Übliche Ausführungsformen sind in den US-PS 3,718,900 und US-PS 4,152,692 beschrieben.

Es gibt zwei unterschiedliche Geophontypen. Einen Typ für den Einsatz in der Vertikalen - in Richtung der Schwerkraft - und einen anderen Typ für den Einsatz in der Horizontalen - senkrecht zur Schwerkraft. Beim Vertikal-Geophon wird der Einfluß der Schwerkraft kompensiert, indem die federnde Aufhängung entsprechend vorgespannt ist. Eine solche Vorspannung hat das Horizontal-Geophon nicht.

Für die Detektion von Bodenbewegungen in alle Richtungen werden je ein Vertikal-Geophon und zwei Horizontal-Geophone zu einem 3-Komponenten Seismometer verbunden, so daß nach entsprechender Nivellierung des Seismometers vertikale, nord-südliche und ost-westliche Bodenbewegungen getrennt voneinander detektiert werden. Solche Anordnungen sind in der Prospektions-Geophysik seit vielen Jahren im Einsatz. Eine alternative Anordnung, die in der Breitband-Seismologie verwendet wird, ist die sogenannte "Galperin-Anordnung", für die nur ein einziger Typ von Geophon erforderlich ist.

Nachteilig für die Erdbeben-Geophysik (Seismologie) ist der Umstand, daß unterhalb der Eigenfrequenz des federnd aufgehängten Teils die Empfindlichkeit des Geophons rapide abnimmt. Die Eigenfrequenz industriell gefertigter Geophone liegt im Bereich 1 - 20 Hz. Die Seismologie analysiert Bodenbewegungen im Bereich 1 milliHz - 20 Hz. Deshalb sind die Geophone der Prospektions-Geophysik für die Seismologie unbrauchbar.

In der Schrift von E. Wielandt, "Design Principles of Electronic Inertial Seismometers", veröffentlicht in "Earthquakes: Observation, Theory and Interpretation", 1983, LXXXV Corso, Soc. Ialiana di Fisica, Bologna, sind Anordnungen beschrieben, die Bodenbewegungen im seismologischen Frequenzbereich detektieren. Allen heutigen sog. "langperiodischen" Seismometern ist gemeinsam, daß mittels eines Lagedetektors und einer elektrodynamischen Nachführvorrichtung die federnd aufgehängte seismische Masse durch eine elektronische Rückkopplungsschaltung relativ zum Gehäuse in Ruhe gehalten, den zu detektierenden Bodenbewegungen also nachgeführt wird. Dadurch wird der Einfluß der mechanischen Eigenfrequenz auf das Übertragungsverhalten unterdrückt und aus dem Rückkopplungssignal wird ein Ausgangssignal abgeleitet, das auch im seismologischen Frequenzbereich der Bodenbewegung proportional ist. Eine Ausführungsform ist in der US-PS 4,280,206 beschrieben.

In der US-PS 6,075,754 wird eine vereinfachte Version einer ähnlichen Bauart offenbart, bei der ein Standard-Geophon gleichzeitig als seismische Masse, als Beschleunigungsdetektor und als Nachführvorrichtung genutzt wird.

Mit zunehmender Erschöpfung terrestrischer und küstennaher Ölreservoire wird die Suche nach neuen Quellen auf immer tiefere Meeresgebiete ausgedehnt. Die hohen Erschließungskosten in diesen Tiefen stellen immer höhere Anforderungen an die Qualität seismischer Prospektion, so daß neben der im Meer üblichen Registrierung von Druckwellen mittels Hydrophonen an der Wasseroberfläche zunehmend zusätzlich Seismometer direkt am Meeresboden eingesetzt werden. Die erforderliche vertikale Ausrichtung des Seismometers wird zumeist noch durch mechanische Vorrichtungen, zumeist kardanischen Aufhängungen in hochviskosen Flüssigkeiten, realisiert; die horizontale Ausrichtung in Nord-Süd- und Ost-West-Richtung wird durch einen integrierten Kompaß oder durch die Registrierung seismischer Kalibrierimpulse ermöglicht. Auch das Gebiet der Bohrlochseismik ist damit konfrontiert, daß Bohrlöcher heutzutage nicht mehr nur "gerade" und "senkrecht" sind, sondern Biegungen und sogar horizontale Strecken aufweisen. Deshalb eröffnet die vorliegende Erfindung auch der Bohrlochseismik neue Möglichkeiten.

In einer Firmendruckschrift der Firma EPRO GmbH zum "Vibration Transducer PR9268" wird bereits 1998 beschrieben, daß durch Einprägen eines geeignet eingestellten Kompensationsstroms in die Spule des Transducers dieser auch bei schrägem Einbau wieder in seine Mittellage zurückgestellt werden kann, und in der US-PS 6,412,592 B1 wird beschrieben, wie ein solcher Kompensationsstrom mit einem Potentiometer, das in geeigneter Weise mechanisch an das Geophon gekoppelt ist, je nach Schrägstellung automatisch erzeugt werden kann.

In der Offenlegungsschrift WO 03/096071 A1 werden ein Verfahren und eine Vorrichtung beschrieben, in der der durch eine Schrägstellung des Geophons erzeugte Meßfehler dadurch reduziert wird, daß der in das Geophon eingespeiste Kompensationsstrom aus dem Signal eines separaten Beschleunigungs- bzw. Neigungssensors abgeleitet wird, so daß der Restfehler einer maximal verbleibenden Schrägstellung von 10 Grad entspricht. Somit ist dieses Verfahren bzw. diese Anordnung geeignet, die Schrägstellung von Geophonen bis zu einer unteren Grenzfrequenz von 10 Hz ohne Kalibrierung zu kompensieren.

Aufgabe der vorliegenden Erfindung ist es, ein Verfahren der einleitend genannten Art derart anzugeben, daß eine präzise elektronische Kompensation einer Schrägstellung auch von Geophonen unterhalb 10 Hz ohne Kalibrierung ermöglicht wird bei gleichzeitig geringerem Energieverbrauch im Vergleich zur Anordnung wie in WO 03/096071 A1 beschrieben.

Diese Aufgabe wird erfindungsgemäß dadurch gelöst, daß innerhalb des Geophongehäuses von einem Lagesensor die Position der Spule relativ zum Permanentmagneten erfaßt und von einer Regelung ein Strom derart durch die Spule hindurch generiert wird, daß die Spule bei Abwesenheit seismischer Anregung eine vorgegebene Grundposition relativ zum Permanentmagneten einnimmt.

weitere Aufgabe der vorliegenden Erfindung ist es, eine Vorrichtung der einleitend genannten Art derart zu konstruieren, daß eine Nivellierung der Seismometeranordnung überflüssig wird.

Diese Aufgabe wird erfindungsgemäß dadurch gelöst, daß die Spule in einer rückgekoppelten Anordnung betrieben wird, in der der zur Lagekompensation in die Spule eingeprägte Strom mittels eines Integrators in seiner Stärke jeweils vergrößert bzw. verkleinert wird, bis daß die mit dem Lagesensor detektierbare Ruhelage wieder erreicht ist.

wird dieses so erweiterte Geophon aus der Horizontalen in die Vertikale gekippt, so wird sich die seismische Masse unter dem Einfluß der Schwerkraft aus der mittleren Ruhelage herausbewegen. Diese Abweichung wird vom Lagesensor detektiert und ein entsprechender Kompensationsstrom in die Spule des Geophons eingespeist, der die seismische Masse zurück in die Ruhelage befördert. Die Vorspannung der federnden Aufhängung eines Vertikal-Geophons wird hier also durch einen Strom ersetzt, der die Schwerkraft elektrodynamisch kompensiert.

Es könnte natürlich auch ein Vertikal-Geophon zugrunde gelegt werden, bei dem bei Kippen in die Horizontale die dann in Bewegungsrichtung der seismischen Masse abnehmende Schwerkraft durch einen entsprechenden Kompensationsstrom ersetzt wird.

Eine sehr genaue Lageerfassung bei kleiner räumlicher Sensordimensionierung kann dadurch erfolgen, daß die Lageerfassung kapazitiv durchgeführt wird.

Ein weiteres Meßprinzip besteht darin, daß die Lageerfassung induktiv durchgeführt wird.

Darüber hinaus ist daran gedacht, daß die Lageerfassung optisch durchgeführt wird.

Geringe Kräfte für die Regelung sind dann erforderlich, wenn die seismischen Masse aus einer verschieblich geführten Spule besteht, deren Position durch die Lageerfassung detektiert wird.

Eine weitere Ausführungsform besteht darin, daß die Lage eines beweglich innerhalb des Gehäuses geführten Permanentmagneten erfaßt wird.

Die Vorgabe einer Grundpositionierung in einem Ruhezustand wird dadurch unterstützt, daß die verschieblich geführte seismische Masse federnd innerhalb des Gehäuses geführt wird.

Eine Erfassung von seismischen Bewegungen in allen räumlichen Richtungen wird dadurch erreicht, daß von drei Geophonen seismische Bewegungen in drei jeweils rechtwinklig oder in einer sogenannten "Galperin Anordnung" zueinander angeordneten räumlichen Orientierungen erfaßt werden.

Eine typische dynamische Auslegung besteht darin, daß seismische Bewegungen in einem Frequenzbereich von 1 milliHz bis 20 Hz erfaßt werden.

Eine nachträgliche elektronische Kompensation einer Schrägstellung des Geophons wird dadurch unterstützt, daß die Größe eines durch die Spule fließenden Kompensationsstromes meßtechnisch erfaßt wird.

Zur Vermeidung einer energieintensiven Datenübertragung während der Durchführung von Meßvorgängen wird vorgeschlagen, daß mindestens einige der erfaßten Meßwerte auf einem Datenträger aufgezeichnet werden.

Eine Normierung der erfaßten Daten auf eine exakte horizontale bzw. vertikale Ausrichtung der Geophone erfolgt dadurch, daß unter Berücksichtigung des meßtechnisch erfaßten Kompensationsstromes eine Koordinatentransformation durchgeführt wird.

Eine mögliche elektrische Realisierungsvariante besteht darin, daß eine analoge Meßdatenverarbeitung durchgeführt wird.

Ebenfalls ist daran gedacht, daß eine digitale Meßdatenverarbeitung durchgeführt wird.

Eine Nachbearbeitung der Datenmenge kann dadurch erfolgen, daß die Meßdatenverarbeitung zeitgleich zur Durchführung durchgeführt wird.

Eine Datenverarbeitung ohne Beschränkung der zur Verfügung stehenden Versorgungsenergie wird dadurch unterstützt, daß die Meßdatenverarbeitung mindestens teilweise zeitlich nach der Durchführung der Messung erfolgt.

Eine exakte räumliche Zuordnung der erfaßten seismischen Daten wird dadurch ermöglicht, daß zusätzlich zu den Meßdaten des Geophons Meßdaten eines elektronischen Kompasses ausgewertet werden.

Eine exakte räumliche Zuordnung der erfaßten seismischen Daten kann auch dadurch ermöglicht werden, daß zusätzlich zu den Meßdaten des Geophons kurze Zeit (ca. 1 Stunde) nach Ausbringung des Seismometers an den Meßort Meßdaten eines elektronischen Inertialsystems erfaßt werden.

Eine Beeinflussung der Meßdaten durch die Eigendynamik des Geophons wird dadurch vermieden, daß bei der Einwirkung von seismischen Bewegungen ein Strom durch die Spule derart generiert wird, daß eine Relativbewegung zwischen der Spule und dem Permanentmagneten kompensiert wird und hierdurch die Anordnung auch beim Einwirken von seismischen Bewegungen in der Umgebung eines Arbeitspunktes verbleibt.

Eine genaue Bestimmung der Lage von Spule und Permanentmagnet relativ zueinander wird dadurch unterstützt, daß das durch den Lagesensor bereitgestellte Meßsignal in einer Meßbrücke mit nachfolgendem Synchrongleichrichter ausgewertet wird.

Eine vorteilhafte Filterung der Lage-Meßdaten wird dadurch ermöglicht, daß zwischen dem Meßbrückenverstärker und dem Synchrongleichrichter ein Bandpaß angeordnet ist.

In den Zeichnungen sind Ausführungsbeispiele der Erfindung schematisch dargestellt. Es zeigen:
- Fig. 1: eine schematische Darstellung einer in einem Gehäuse angeordneten Spule, die sich um einen federnd gelagerten Permanentmagneten herumerstreckt und bei der eine kapazitive Lageerfassung realisiert ist,
- Fig. 2: ein Verlaufsdiagramm zur Veranschaulichung der Kapazität des zur Lageerfassung verwendeten Kondensators in Abhängigkeit vom Abstand der Kondensatorplatten,
- Fig. 3: ein Blockschaltbild einer elektronischen Schaltung zur Umwandlung eines kapazitiven Lagesignals in eine Offsetspannung,
- Fig. 4: ein Prinzipschaltbild einer elektronischen Gesamtanordnung, die gleichzeitig einen Kompensationsstrom in das Geophon einkoppelt, den im Geophon induzierten Strom auf Grund der seismischen Bewegungen auskoppelt sowie dem Ausgangssignal eine Kompensationsinformation hinzufügt,
- Fig. 5: ein Blockschaltbild zur Veranschaulichung einer Schaltung eines geschwindigkeitssensitiven Breitbandseismometers und
- Fig. 6: ein Blockschaltbild einer Mikrokontrolleranordnung, in der dem Meßsignal zusätzliche Lageinformation hinzugefügt wird, so daß in einem nachfolgenden Verarbeitungsschritt eine vollständige Normalisierung der Daten durch Koordinatentransformation durchgeführt werden kann.

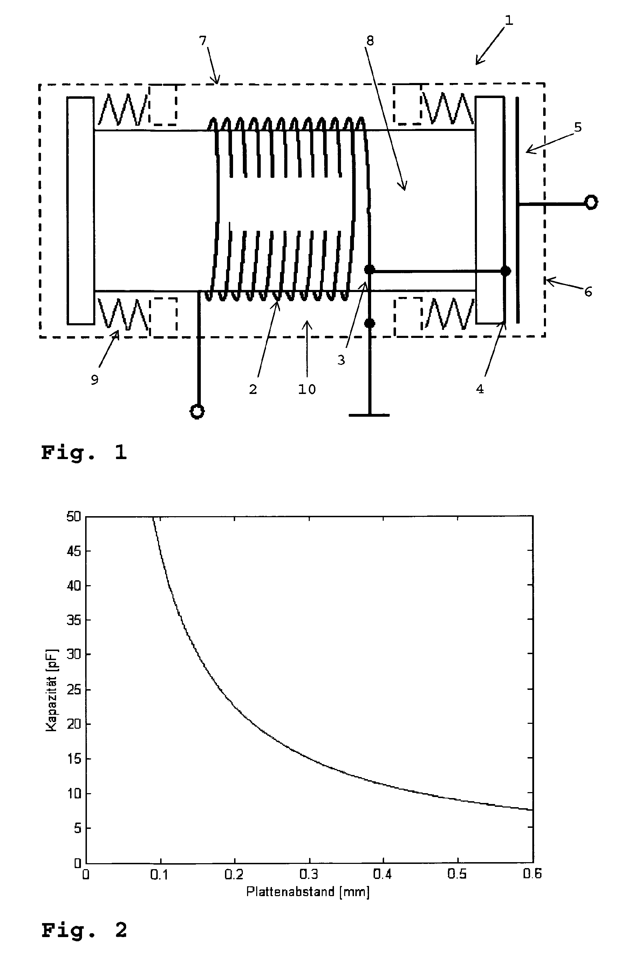

Fig. 1 zeigt die Prinzipskizze eines Geophons (1), dessen Permanentmagnet (8) als seismische Masse dient. Ein Wicklungsende (3) einer den Permanentmagneten (8) bereichsweise umgebenden Spule (2) ist mit den ferromagnetischen Metallen des Seismometers elektrisch leitend verbunden und wird im Betrieb üblicherweise geerdet. An diesem Spulenende (3) ist eine ringförmige Elektrode (4) elektrisch leitend mit der seismischen Masse verbunden. Dieser gegenüber ist eine zweite Elektrode (5) an der aus einem Isoliermaterial bestehenden Verschlußkappe (6) des Geophons angebracht. Die beiden Elektroden (4, 5) bilden einen Meßkondensator, dessen Kapazität unmittelbar von der Lage der seismischen Masse abhängt, wie dies in Fig. 2 veranschaulicht ist. Die Spule (2) erstreckt sich um den Permanentmagneten (8) herum und ist gemeinsam mit diesem in einem Gehäuse (7) angeordnet. Für eine nachgiebige Lagerung des Permanentmagneten (8) sind Federn (9) verwendet. Der interne Meßkondensator bildet einen Lagesensor (10) aus.

Ist eine höhere Genauigkeit erforderlich, so kann der kapazitive Lagesensor differentiell ausgelegt werden, indem der Kondensator aus drei Platten aufgebaut wird, deren mittlere Platte entweder die seismische Masse selber, oder mechanisch mit ihr gekoppelt ist. Dadurch wird nämlich der nicht-lineare Fehler eliminiert, der durch den Verlauf des Abstands/Kapazitätsverhältnisses einer Zweiplattenanordnung entsteht, wie in Fig. 2 veranschaulicht.

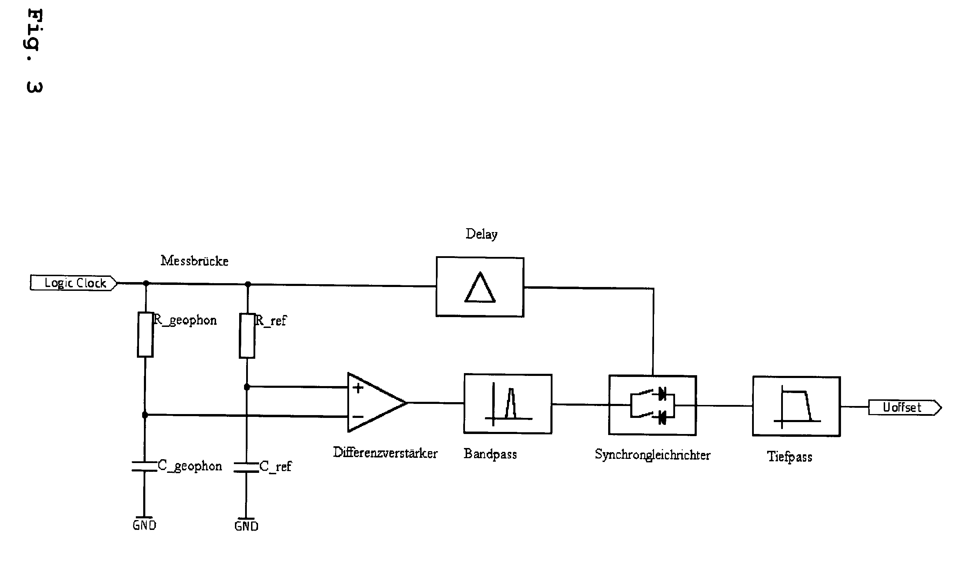

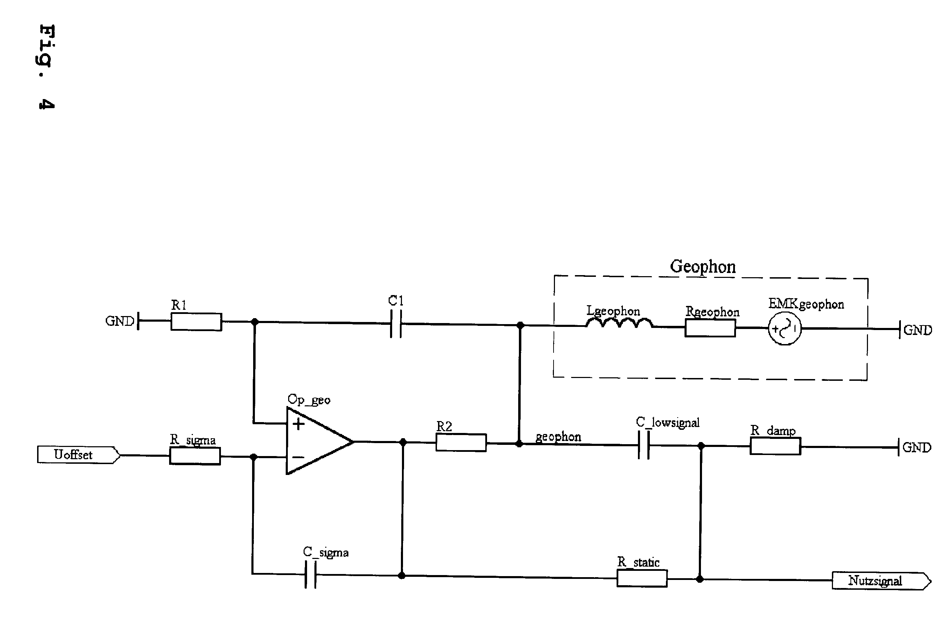

Werden drei solche um elektronische Anordnungen gemäß Fig. 3 und Fig. 4 erweiterten Geophone (1) zu einem 3-Komponenten Seismometer zusammengesetzt, so wird sich je nach Lage relativ zur Vertikalen in jedem Geophon (1) ein spezifischer Kompensationsstrom einstellen. Ist die elektrodynamische Empfindlichkeit der einzelnen Geophone (1) bekannt, so kann mittels der Stärke der Kompensationsströme der drei Geophone (1) die Lage des Seismometers in der Vertikalen eindeutig bestimmt werden. Der interne Meßkondensator macht so die Bereitstellung von Kippinformation durch externe Anordnungen wie in US-PS 6,412,592 B1 und WO 03/096071 A1 beschrieben, überflüssig.

In einem nachfolgenden Verarbeitungsschritt können auf Basis der Stärke der Kompensationsströme die dynamischen Ausgangssignalen der Geophone in einer analogen oder digitalen elektronischen Koordinatenrotationsanordnung so transformiert werden, daß diese den Signalen entsprechen, die ein vertikal nivelliertes Seismometer unter ansonsten gleichen Bedingungen erzeugen würde. Ein solches auto-nivellierendes Seismometer wird vorzugsweise dann eingesetzt, wenn eine Nivellierung per Hand bei Kopplung des Seismometers an den Boden unwirtschaftlich ist, wie zum Beispiel auf dem Meeresgrund. Die elektronische Koordinatenrotation nach vorheriger vertikaler Lagebestimmung ersetzt so vollständig die Funktion bisher üblicher mechanischer Lösungen z.B. mittels kardanischer Aufhängung.

Wird die Zeitkonstante der Ruhelagenkompensationsregelung so gewählt, daß sie weit genug unterhalb der tiefsten zu detektierenden seismischen Frequenz liegt, so beeinflußt die Auto-Nivellierung das gewünschte Nutzsignal nicht und läuft als Regelungsprozeß kontinuierlich im Hintergrund, so daß ein solches Seismometer wie ein kardanisch aufgehängtes System bei plötzlicher Lageveränderung z.B. durch starke bodennahe Wasserströmungen nach einiger zeit wieder vertikal ausgerichtete Signale liefert.

Alternativ kann die Koordinatenrotation auch erst in einem Nachbearbeitungsschritt erfolgen, wenn parallel zu den seismischen Signalen auch die Stärke der Kompensationsströme registriert wird. Um die Anzahl erforderlicher Signalleitungen zu minimieren, kann dies z.B. dadurch erfolgen, daß mittels eines Steuersignals von der Registriereinheit zum Seismometer über einen Multiplexer entweder die seismischen Signale oder die Kompensationssignale auf die Signalleitungen geschaltet werden.

Wird die Stärke des Kompensationsstroms in geeignet skalierter Form zum Ausgangssignal des Geophons als quasistatischer Anteil addiert, so sind weder zusätzliche Steuer- noch Signalleitungen erforderlich und die heute üblichen digitalen Registriergeräte können ohne Modifikation genutzt werden. Die Koordinatenrotation erfolgt dann als ein erster Schritt der digitalen Nachbearbeitung, indem die Kompensationsinformation mittels eines digitalen Tiefpaßfilter extrahiert wird. Der für seismische Signale nutzbare Dynamikbereich wird durch letzteres Verfahren deshalb kaum verringert, da eine Positioniergenauigkeit des Seismometers in vertikaler Richtung von einem Winkelgrad in der Praxis ausreicht, so daß für das Kompensationssignal lediglich ein diskretisierter Dynamikumfang von 9 Bit erforderlich ist bei typischerweise 20 Bit effektiver Auflösung (120 dB Dynamik) seismischer Analog-Digital-wandler.

Wird das 3-Komponenten-Seismometer um einen elektronischen Kompaß erweitert, der lageunabhängig den Azimut detektiert, so kann nach obigem Verfahren auch diese Information zum Ausgangssignal der drei Geophone addiert werden, da alleine für die Bestimmung der vertikalen Ablage prinzipiell zwei Korrektursignale ausreichen. Dann können in der digitalen Nachbearbeitung die Ausgangssignale des Seismometers vertikal und horizontal eindeutig orientiert werden.

Um den Azimut zu bestimmen, ist auch daran gedacht, statt eines elektronischen Kompasses ein elektronisches Inertialsystem zu nutzen, dessen Position nach Ausbringung der Seismometeranordnung auf dem Meeresgrund registriert wird, nachdem es vorher an Deck kalibriert worden war.

Im folgenden wird eine elektronische Anordnung beschrieben, mit der sehr kleine Kapazitätsänderungen im Femtofaradbereich detektiert werden können.

Fig. 3 zeigt das Blockschaltbild einer elektronischen Schaltung, die die Ablage des Geophons in eine Spannung *Uoffset* umwandelt. Die im Geophon angebracht Kapazität *C_geophon* ist Teil einer Meßbrücke, die weiter aus *R_geophon, R_ref* und *C_ref* besteht. Gespeist wird die Brükke durch ein Logiksignal mit einem Tastverhältnis von 1:1. Am Ausgang von *Differenzverstärker* entsteht eine durch die Änderung von *C_geophon* in Amplitude und Phase modulierte Ausgangsspannung. Diese wird zunächst in *Bandpaß* gefiltert, wodurch sowohl Rauschen unterdrückt, als auch durch Resonanzüberhöhung die Empfindlichkeit der Meßbrücke insgesamt gesteigert wird. Das Signal wird dann mit *Synchrongleichrichter* gleichgerichtet und steht nach Filterung durch *Tiefpaß* als *Uoffset* zur weiteren Verarbeitung zur Verfügung. *Uoffset* ist proportional zur Ablage der seismischen Masse des Geophons. Die Mittellage kann durch geeignete Einstellung von *R_ref* justiert werden.

Im Folgenden wird beschrieben, wie die Lageinformation der seismischen Masse genutzt wird, um ein Geophon für die Explorationsseismik zu realisieren, das elektronisch den Einfluß der Schwerkraft auf die seismische Masse kompensiert und diese Kompensationsinformation so dem eigentlichen seismischen Signal zufügt, daß bei einer 3-Komponenten-Anordnung die Koordinatenrotation für eine präzise vertikale Ausrichtung durch Nachbearbeitung der digitalisierten Daten erfolgen kann.

Dazu wird vorstehend beschriebenes *Uoffset* in einem Integrator integriert, dessen Integrationskonstante weit unterhalb des seismischen Nutzsignals liegt, dessen unterste Grenzfrequenz in der Explorationsseismik üblicherweise bei 4 - 5 Hz liegt. Das Ausgangssignal des Integrators wird als Kompensationsstrom in die Spule des Geophons eingespeist und ist so gerichtet, daß es dem Einfluß der Schwerkraft entgegenwirkt. Das seismische Nutzsignal wird kapazitiv aus dem Geophon ausgekoppelt wodurch das am Wicklungswiderstand des Geophons abfallende Kompensationspotential ausgeblendet wird. Ein dem Kompensationsstrom proportionales Signal wird hinter dem Koppelkondensator in abgeschwächter Form dem Nutzsignal hinzugefügt, so daß sich die Information über die vertikale Ablage eines Geophons in lediglich 1% des üblicherweise zur Verfügung stehenden Dynamikbereichs unterbringen läßt.

Fig. 4 zeigt das Prinzipschaltbild einer elektronischen Anordnung, die die vorstehend beschriebenen Funktion in sich vereinigt. *Op_geo, R_sigma* und *C_sigma* bilden den Integrator, der von *Uoffset* gesteuert wird. Das Geophonsignal geo*phon* ist über *C_lowsignal* an den Dämpfungswiderstand *R_damp* angeschlossen. Gleichzeitig wird über den Hochpaß *C1*/*R1* das Geophonsignal zum Ausgangssignal des Integrators addiert und über den Entkopplungswiderstand R2 in das Geophon eingespeist, wodurch ein der Ladung auf *C_sigma* proportionaler Strom in das Geophon eingeprägt wird. Über den Spannungsteiler *R_static*/*R_damp* wird die Kompensationsinformation für die nachfolgende Verarbeitung dem Nutzsignal in ausreichender Höhe hinzugefügt.

Das mit einem Lagesensor versehene Geophon kann auch zur Realisierung eines Breitbandseismometers genutzt werden, wie es in der Teleseismik gebraucht wird. Der dort interessierende Frequenzbereich erstreckt sich von ca. 0,01 - 50 Hz und liegt damit weit unterhalb der mechanischen Resonanzfrequenz eines Geophons.

Ein solch weit nach unten reichender Frequenzbereich kann dadurch realisiert werden, daß das Geophon in einer aktiven Rückkopplungsschleife betrieben wird, die die seismische Masse der Bewegung des Geophons nachführt. Dann bewegt sich die seismische Masse relativ zum Gehäuse kaum noch, so daß der Einfluß des Feder-Massesystems auf das Übertragungsverhalten weitgehend eliminiert wird.

Ein weiterer Vorteil einer solchen Anordnung besteht darin, daß innerhalb der Rückkopplung ein der Geschwindigkeit des Geophons proportionales Signal abgegriffen werden kann, das als seismisches Nutzsignal herausgeführt wird.

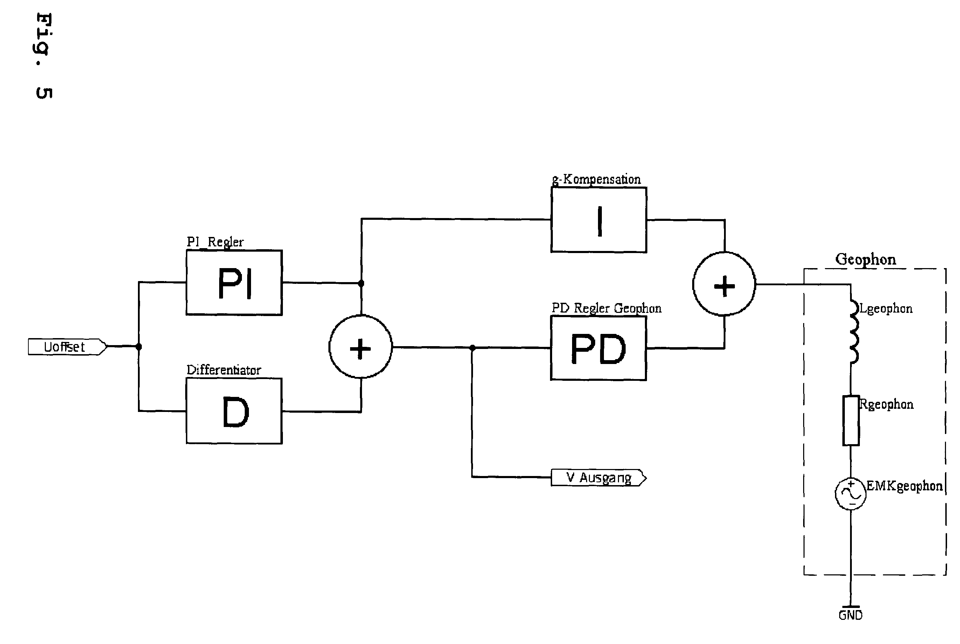

Fig.5 zeigt den schematischen Aufbau des Reglers des geschwindigkeitssensitiven Breitbandseismometers. Da die an der seismischen Masse angreifende Trägheitskraft proportional zur Bodenbeschleunigung ist, muß die Übertragungsfunktion des gesamten rückgekoppelten Systems innerhalb der Meßbandbreite integrierenden Charakter haben, d.h. mit 20 dB/Dekade abfallen. Diese Charakteristik läßt sich in einem rückgekoppelten System nur auf die weise realisieren, daß die Hinführung zum Nutzsignal-Ausgang innerhalb des Meßbandes integrierendes, und die Rückführung differenzierendes Verhalten aufweisen. Soll das Seismometer dabei auch Frequenzen unterhalb der mechanischen Resonanz des zugrundeliegenden Geophons übertragen, bedeutet dies, daß der entstehende Resonanzknick durch eine spektrale Multiplikation von *Uoffset* mit der inversen Übertragungsfunktion des Geophons geglättet und im Anschluß integriert werden muß. Diese beiden Aufgaben werden vom PID Regler am Eingang des dargestellten Blockschaltbildes übernommen. An seinem Ausgang liegt das geschwindigkeitsproportionale Meßsignal *V_Ausgang* an. In der Rückführung muß neben dem schon genannten differentiellen Anteil ein Integrator zur Schwerkraftkompensation enthalten sein. Der zusätzlich hinzugefügte P-Anteil ist zur Dämpfung des entstehenden Resonanzknickes zweiter Ordnung eingefügt worden. Die auf diese Weise erzeugte Stellspannung, welche innerhalb der Meßbandbreite proportional zur Bodenbeschleunigung ist, wird daraufhin an die Spule des Geophons angelegt, die dadurch als Stellglied arbeitet. Der eingeprägte Stromfluß hängt neben der Stellspannung und dem ohmschen Spulenwiderstand Rgeophon zusätzlich von der Spuleninduktivität Lgeophon sowie der Induktionsspannung EMKgeophon ab, die durch die Restbewegung der Spule im Magnetfeld erzeugt wird.

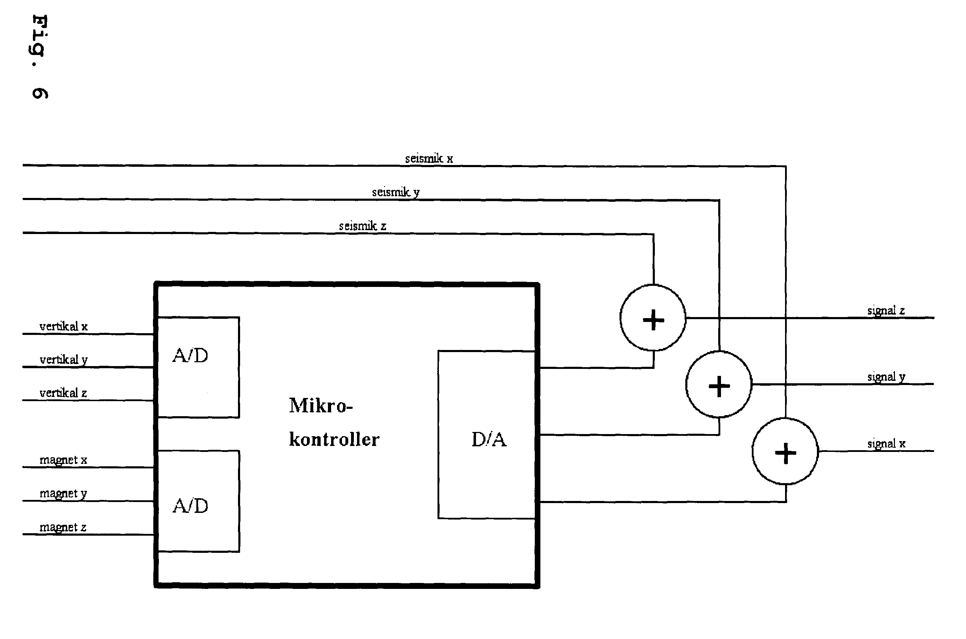

Die eindeutige räumliche Orientierung der seismischen Signale eines 3-Komponenten-Seismometers bzw. eines schwerkraftkompensierten 3-Komponenten Geophons erfordert neben der vertikalen Ausrichtung der Z-Komponente auch eine eindeutige Nord-Süd- bzw. Ost-West-Ausrichtung der X- und Y-Komponenten. Dazu ist der Einbau eines elektronischen Kompaß bzw. eines elektronischen Ineritalsystems in das Seismometergehäuse erforderlich. Erfindungsgemäß stehen für die vertikale Ausrichtung in der Z-Achse entsprechende Signale der drei Geophone zur Verfügung. Der elektronische Kompaß liefert z.B. analoge Magnetfelddaten der drei Raumrichtungen - Hx, Hy und Hz. Diese sechs bestimmenden Parameter können in einer Mikrokontrollerschaltung digitalisiert werden. Die erforderliche Auflösung kann dabei auf 10 Bit beschränkt bleiben, da die räumliche Ausrichtung auf ein Winkelgrad genau im allgemeinen ausreichend ist. Auch sind die Anforderungen an die Rechengeschwindigkeit gering, da es sich bei der räumlichen Lage des Seismometers um ein quasistatisches Phänomen handelt. Berechnet wird aus den sechs Eingangsvariablen der Neigungs- und Kippwinkel relativ zur Horizontalen sowie der Azimut als Drehwinkel gegenüber der Nordrichtung. Diese drei Winkelinformationen werden über Digital-Analogwandler in analoge Signale gewandelt und den seismischen Nutzsignalen der drei Raumrichtungen passend skaliert hinzugefügt. In der Nachbearbeitung wird über digitale Filterung Winkelinformation und Nutzsignalen getrennt, so daß durch nachfolgende Koordinatenrotation die Nutzsignale den drei Raumrichtungen gemäß ausgerichtet werden können. Fig. 6 zeigt das Blockschaltbild einer solchen Mikrokontrolleranordnung

## Patentansprüche

1. Verfahren zur Erfassung mindestens einer seismisch bedingten Bewegung, bei dem innerhalb eines Gehäuses eine Relativbewegung zwischen einer Spule und einem Permanentmagneten erzeugt wird und in dem ein durch die Spule fließender Strom als elektrische Meßgröße ausgewertet wird, die von der Intensität der seismischen Bewegung abhängig ist, **dadurch gekennzeichnet, daß** von einem Lagesensor die Positionierung der Spule relativ zum Permanentmagneten erfaßt und von einer Regelung ein Kompensationsstrom durch die Spule hindurch derart generiert wird, daß die Spule eine vorgegebene Grundpositionierung relativ zum Permanentmagneten einnimmt.

2. Verfahren nach Anspruch 1, **dadurch gekennzeichnet, daß** das durch den Lagesensor bereitgestellte Meßsignal über einen Integrator auf die Spule (2) rückgekoppelt wird.

3. Verfahren nach einem der Ansprüche 1 bis 2, **dadurch gekennzeichnet, daß** das hochpaßgefilterte seismische Nutzsignal (z.B. mit C1/R1 in Fig. 4) zum Ausgangssignal der Lagekompensationsregelung addiert und die Summe in die Spule des Geophons eingespeist wird (z.B. mit R2 in Fig. 4).

4. Verfahren nach einem der Ansprüche 1 bis 3, **dadurch gekennzeichnet, daß** das seismische Nutzsignal über einen Hochpaß (z.B. mit C_lowsignal/R_damp in Fig. 4) ausgekoppelt und ein Teil des Ausgangssignals des Lagekompensationsreglers (z.B. mit R_static/R_damp in Fig. 4) als Tiltinformation zum seismischen Ausgangssignal hinzugefügt wird.

5. Verfahren nach Anspruch 1, **dadurch gekennzeichnet, daß** das durch den Lagesensor bereitgestellte Meßsignal in einer Regelschaltung ausgewertet und mit dieser Regelschaltung sowohl ein Lageregelsignal auf die Spule (2) rückgekoppelt wird, als auch das seismische Nutzsignal und eine Tiltinformation erzeugt werden.

6. Vorrichtung zur Erfassung einer seismisch bedingten Bewegung, die mindestens eine in einem Gehäuse angeordnete Spule und mindestens einen mit dem Gehäuse starr verbundenen Permanentmagneten aufweist und bei der die Spule und der Permanentmagnet in Richtung einer Spulenlängsachse zueinander beweglich geführt sind und bei der die Spule an eine Meßeinrichtung zur Bestimmung eines durch die Spule fließenden Stromes angeschlossen ist, **dadurch gekennzeichnet, daß** die Spule (2) in einer rückgekoppelten Anordnung mit einer Regelung zur Vorgabe eines mindestens zeitweilig durch die Spule (2) fließenden Stromes verbunden ist, und daß die Regelung an einen Lagesensor (10) zur Erfassung einer aktuellen Positionierung der Spule (2) relativ zum Permanentmagneten (8) angeschlossen ist.

7. Vorrichtung nach Anspruch 6, **dadurch gekennzeichnet, daß** der Lagesensor in eine durch ein Taktsignal angeregte Meßbrücke integriert ist, der ein Synchrongleichrichter folgt.

8. Vorrichtung nach einem der Ansprüche 6 bis 7, **dadurch gekennzeichnet, daß** vor dem Synchrongleichrichter ein Bandpaß angeordnet ist.

9. Vorrichtung nach Anspruch 6, **dadurch gekennzeichnet, daß** die beweglich innerhalb des Gehäuses (7) geführte Spule (2) federnd aufgehängt ist.

10. Vorrichtung nach einem der Ansprüche 6 bis 9, **dadurch gekennzeichnet, daß** drei mit Lagesensor versehene Geophone (1) mit den Längsachsen ihrer Spulen (2) in vorgegebenen Winkeln zueinander angeordnet sind.

11. Vorrichtung nach einem der Ansprüche 6 bis 10, **dadurch gekennzeichnet, daß** benachbart zum Gehäuse (7) eine Datenaufzeichnungseinrichtung zumindest für das seismische Nutzsignal bzw. die seismischen Nutzsignale angeordnet ist.

12. Vorrichtung nach Anspruch 10 und 11, **dadurch gekennzeichnet, daß** mit den drei Geophonen ein elektronischer Kompaß bzw. ein elektronisches Inertialsystem fest verbunden ist, und daß die Tiltinformation der Geophone und die zusätzliche Lageinformation des Kompasses bzw. des Inertialsystems in ein dazu benachbart angeordnetes Mikroprozessorsystem eingespeist wird, das daraus drei Korrekturwerte errechnet, die in einer folgenden analogen Additionsstufe jeweils einem der drei seismischen Nutzsignalen hinzugefügt werden.
